# EUROPEAN PATENT SPECIFICATION

(11) **EP 4 362 196 B1**
(45) Date of publication and mention of the grant of the patent: **03.12.2025**
(21) Application number: 22881303.6
(22) Date of filing: 11.10.2022
(51) Int. Cl.: H01M 50/184, H01M 50/186, H01M 50/30, H01M 50/105, H01M 50/178, H01M 50/342

(54) **BATTERY CELL AND BATTERY MODULE COMPRISING SAME**
BATTERIEZELLE UND BATTERIEMODUL DAMIT
ÉLÉMENT DE BATTERIE ET MODULE DE BATTERIE LE COMPRENANT

(30) Priority: 14.10.2021 KR 20210136429; 05.10.2022 KR 20220127087
(43) Date of publication of application: 01.05.2024
(73) Proprietor: LG Energy Solution, Ltd., Seoul 07335 (KR)
(72) Inventor: CHOI, Hongjun, Daejeon 34122 (KR); KIM, Dongyeon, Daejeon 34122 (KR); KONG, Jinhak, Daejeon 34122 (KR)
(74) Representative: Plasseraud IP
(86) International application number: PCT/KR2022/015261
(87) International publication number: WO 2023/063676

(56) References cited:
- KR-A- 20070 056 425
- KR-A- 20090 064 041
- KR-A- 20110 102 667
- KR-A- 20160 045 468
- KR-A- 20200 055 680
- US-A1- 2011 223 448
- US-A1- 2015 093 608

## Description

### [Technical Field]

### CROSS-REFERENCE TO RELATED APPLICATION

This application claims priority to and the benefit of Korean Patent Application No. 10-2021-0136429 filed in the Korean Intellectual Property Office on October 14, 2021, and Korean Patent Application No. 10-2022-0127087 filed in the Korean Intellectual Property Office on October 05, 2022.

The present invention relates to a battery cell and a battery module including the battery cell, and more particularly, to a battery cell including a gas discharge portion to which a sealing pattern vulnerable to a sealing strength is applied, and a battery module including the battery cell.

### [Background Art]

As technology development and demand for mobile devices increase, demand for secondary batteries as an energy source has been rapidly increasing. In particular, secondary batteries are of great interest as energy sources for power devices such as electric bicycles, electric vehicles, and hybrid electric vehicles as well as mobile devices such as mobile phones, digital cameras, laptops, and wearable devices.

These secondary batteries are classified into cylindrical batteries and angular batteries in which an electrode assembly is embedded in a cylindrical or angular metal can, and pouch-type batteries in which an electrode assembly is embedded in a pouch-type case made of an aluminum laminate sheet according to the shape of a battery case. Here, electrode assemblies embedded in the battery case are power generating devices including a positive electrode, a negative electrode, and a separator structure interposed between the positive electrode and the negative electrode and capable of charging and discharging, and are classified into a jelly-roll type in which long sheet-type positive and negative electrodes coated with an active material are wound with a separator interposed therebetween, and a stack type in which a plurality of positive and negative electrodes are sequentially stacked with a separator interposed therebetween.

Among these, in particular, the usage of the pouch-type battery having a structure in which a stack or stack/folding type electrode assembly is embedded in a pouch-type battery case of an aluminum laminate sheet is gradually increasing owing to a low manufacturing cost, a small weight, and an easily deformable form.

However, as the energy density of battery cells has been increasing recently, there is a problem in that the amount of gas generated inside the battery cells also increases. **In** the case of the battery cell according to the related art, since there is no component through which gas generated inside the battery cell may be discharged, the battery cell may have a venting phenomenon due to the generation of gas. In particular, when the venting phenomenon occurs in the battery cell according to the related art, gas is discharged to a part vulnerable to sealing. Such a gas is a flammable gas and may heat adjacent cells, leading to ignition and explosion of adjacent cells.

Accordingly, there is an increasing need to develop a battery cell in which gas discharge is effectively performed when the venting phenomenon of the battery cell occurs and safety is improved by inducing the gas discharge in a specific direction.

Document US 2011/223448 A1 relates to a rechargeable battery having improved safety characteristics. Document US 2015/093608 A1 relates to a battery cell having battery case and a frame, where the frame includes a venting guiding portion.

### [Disclosure]

### [Technical Problem]

The present invention has been made in an effort to provide a battery cell including a gas discharge portion to which a sealing pattern vulnerable to a sealing strength is applied, and a battery module including the battery cell.

The problem to be solved by the present invention is not limited to the above-mentioned problem, and problems not mentioned will be clearly understood by those skilled in the art from the present specification and the accompanying drawings.

### [Technical Solution]

The present invention provides a battery cell including a battery case including an electrode assembly mounted in a storage portion and a sealing portion having a structure in which an outer periphery thereof is sealed; and an electrode lead electrically connected to an electrode tab included in the electrode assembly and protruding in an outer direction of the battery case via the sealing portion, the sealing portion includes a gas discharge portion, a part of the sealing portion in which the gas discharge portion is not located is formed in a first sealing pattern, the gas discharge portion is formed in a second sealing pattern, and the first sealing pattern and the second sealing pattern are different from each other.

In the first sealing pattern, indentation and protrusion are repeated in a longitudinal direction of the sealing portion, and, in the second sealing pattern, indentation and protrusion are repeated in a width direction of the sealing portion.

The first sealing pattern and the second sealing pattern may be the same in an interval between an indented part and a protruding part.

An interval between an indented part and a protruding part of the second sealing pattern may be greater than an interval between an indented part and a protruding part of the first sealing pattern.

In the sealing portion, the gas discharge portion may be located on the outer periphery where the electrode lead is located.

In the outer periphery where the electrode lead is located, the gas discharge portion may be located in a part where the electrode lead is not located.

A sealing strength of the gas discharge portion may be smaller than a sealing strength of the sealing portion.

Another embodiment of the present invention provides a battery module including the above-described battery cell.

The battery cell may be stacked in a direction in which the gas discharge portion is adjacent to a bottom surface thereof.

In the battery cell, the gas discharge portion may be formed in a lower side of the electrode lead in the sealing portion.

### [Advantageous Effects]

According to embodiments, the present invention provides a battery cell including a gas discharge portion to which a sealing pattern vulnerable to a sealing strength is applied, and a battery module including the battery cell, thereby effectively performing gas discharge when a venting phenomenon of the battery cell occurs and improving safety by inducing the gas discharge in a specific direction.

The effects of the present invention are not limited to the above-mentioned effects, and effects not mentioned will be clearly understood by those skilled in the art from the present specification and the accompanying drawings.

### [Description of the Drawings]

FIG. 1 is a top view of a battery cell according to an embodiment of the present invention.
FIG. 2(A) is an enlarged view of one end of a battery cell of FIG. 1, and FIG. 2(B) is a cross-sectional view taken along cutting line A-A' or cutting line B-B' of FIG. 2(A).
FIG. 3(A) is a diagram showing a sealing pattern of a sealing portion of FIG. 2(A), and FIG. 3(B) is a diagram illustrating a sealing pattern of a gas discharge portion of FIG. 2(B).
FIG. 4 is an enlarged view of one end of a battery cell according to a comparative example.
FIG. 5 is a view showing a cross section taken along cutting line a-a' of FIG. 4.

### [Mode for Invention]

The present invention will be described more fully hereinafter with reference to the accompanying drawings, in which embodiments of the invention are shown. However, the present invention may be embodied in several different forms, and is not limited to the embodiment described herein.

In order to clearly describe the present invention, parts irrelevant to the description are omitted, and the same reference numerals are denoted by the same or similar components throughout the specification.

In addition, since the size and thickness of each component shown in the drawings are arbitrarily shown for convenience of explanation, the present invention is not necessarily limited to those as shown. In the drawings, the thickness is shown enlarged to clearly express the various layers and regions. Also, in the drawings, for convenience of explanation, the thicknesses of some layers and regions are exaggerated.

In addition, throughout the specification, when a portion "includes" a certain component, it means that the portion may further include other components without excluding other components unless otherwise stated.

In addition, throughout the specification, when it is referred to as "on a plane", it means when the target portion is viewed from above, and when it is referred to as "on a cross-section", it means when a cross section of the target portion cut vertically is viewed from the side.

Hereinafter, a battery cell according to an embodiment of the present invention will be described.

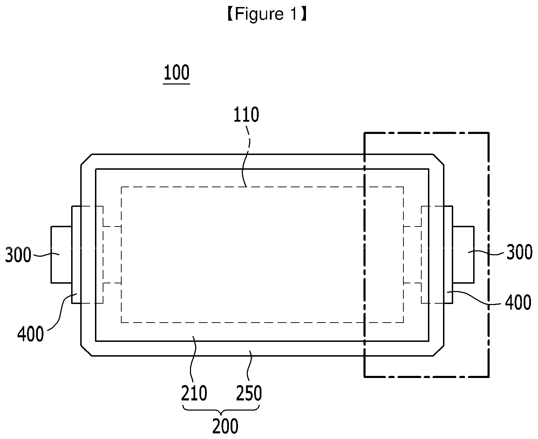

FIG. 1 is a top view of a battery cell according to an embodiment of the present invention.

A battery cell 100 according to an embodiment of the present invention includes a battery case 200 including a sealing portion 250 of a structure in which an electrode assembly 110 is mounted in a storage portion 210 and an outer periphery is sealed, and an electrode lead 300 electrically connected to an electrode tab included in the electrode assembly 110 and protruding in an outer direction of the battery case 200 via the sealing portion 250.

The battery case 200 may be a laminate sheet including a resin layer and a metal layer. More specifically, the battery case 200 may be made of the laminate sheet, and may include an outer resin layer forming the outermost shell, a barrier metal layer preventing penetration of a material, and an inner resin layer for sealing.

The electrode assembly 110 may have a structure of a jelly-roll type (winding type), a stack type (stack type), or a combination type (stack/folding type). More specifically, the electrode assembly 110 may include a positive electrode, a negative electrode, and a separator disposed therebetween.

The electrode lead 300 is electrically connected to an electrode tab (not shown) included in the electrode assembly 110 and protrudes in the outer direction of the battery case 200 via the sealing portion 250. In addition, a lead film 400 is located at a part corresponding to the sealing portion 250 in at least one of upper and lower portions of the electrode lead 300.

Accordingly, the lead film 400 together with the sealing portion 250 may prevent a short circuit from occurring in the electrode lead 300 during thermal fusion or press fusion, and improve sealability between the sealing portion 250 and the electrode lead 300.

Hereinafter, the sealing portion of the battery cell according to the embodiment of the present invention will be mainly described. However, one end of the battery cell will be mainly described here, but it is not necessarily limited thereto, and the same or similar description will be provided even in the case of the opposite end.

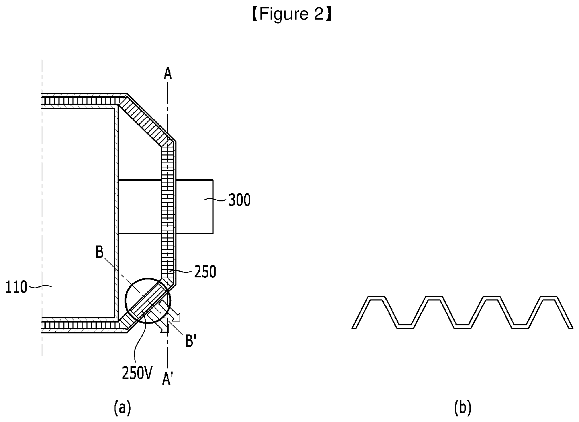

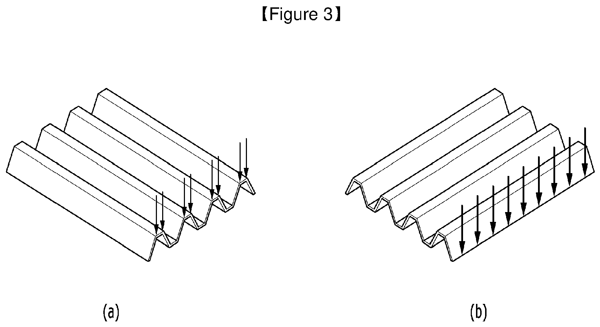

FIG. 2(A) is an enlarged view of one end of a battery cell of FIG. 1, and FIG. 2(B) is a cross-sectional view taken along cutting line A-A' or cutting line B-B' of FIG. 2(A). FIG. 3(A) is a diagram showing a sealing pattern of a sealing portion of FIG. 2(A), and FIG. 3(B) is a diagram illustrating a sealing pattern of a gas discharge portion of FIG. 2(B).

Referring to FIGS. 1 and 2(A), in the battery cell 100 according to the present embodiment, the sealing portion 250 includes a gas discharge portion 250V. That is, the gas discharge portion 250V may be formed by replacing a part of the sealing portion 250. In other words, the gas discharge portion 250V may be inserted into a part of the sealing portion 250.

More specifically, in the sealing portion 250, the gas discharge portion 250V may be located on an outer periphery where the electrode lead 300 is located. That is, the gas discharge portion 250V may be located in the sealing portion 250 that seals the outer periphery where the electrode lead 300 is located.

Accordingly, in general, in the battery cell 100, a part of the sealing portion 250 where the sealing strength is the weakest is the part where the electrode lead 300 is located, but in the case of the present invention, the gas discharge portion 250V is formed in the outer periphery where the electrode lead 300 is located, thereby preventing gas discharged when the internal pressure of the battery cell 100 increases from being discharged to the part of the sealing portion 250 where the electrode lead 300 is located.

For example, in the outer periphery where the electrode lead 300 is located, the gas discharge portion 250V may be located in a part where the electrode lead 300 is not located. That is, the gas discharge portion 250V may be located in the sealing portion 250 that seals the part where the electrode lead 300 is not located in the outer periphery where the electrode lead 300 is located. However, the location of the gas discharge portion 250V is not limited thereto, and the gas discharge portion 250V may be formed at a location considering a direction to induce gas discharge.

Accordingly, as shown in FIG. 2(A), the gas discharged when the internal pressure of the battery cell 100 increases may not be discharged to the part of the sealing portion 250 where the electrode lead 300 is located, and may be discharged through the gas discharge portion 250V located in a part other than the part where the electrode lead 300 is located. That is, the gas discharge portion 250V may induce a discharge direction of the gas discharged when the internal pressure of the battery cell 100 increases in a specific direction.

In addition, in the battery cell 100 of the present embodiment, the sealing strength of the gas discharge portion 250V may be smaller than the sealing strength of the sealing portion 250. Accordingly, when the internal pressure of the battery cell 100 increases, the gas discharge portion 250V may be damaged prior to the sealing portion 250. That is, when the internal pressure of the battery cell 100 increases, the gas discharge portion 250V may be damaged prior to the sealing portion 250, and thus, the gas discharge portion 250V may serve as a passage through which gas is discharged.

Referring to FIG. 2(A), the part of the sealing portion 250 where the gas discharge portion 250V is not located may be formed in a first sealing pattern, and the gas discharge portion 250V may be formed in the second sealing pattern. Here, the first sealing pattern and the second sealing pattern may be different from each other. Here, the sealing pattern may mean a sealing region having a certain pattern.

The first sealing pattern of the sealing portion 250 and the second sealing pattern of the gas discharge portion 250V are patterns in which indentation and protrusion are repeated in different directions. For example, as shown in FIG. 2(B), the first sealing pattern has repeated indentation and protrusion in a longitudinal direction (cutting line A-A') of the sealing portion 250, and the second sealing pattern has repeated indentation and protrusion in a width direction (cutting line B-B') of the sealing portion 250.

Referring to FIGS. 2 and 3(A), the sealing portion 250 has the first sealing pattern in which indentation and protrusion are repeated in the longitudinal direction of the sealing portion 250. At this time, the first sealing pattern may receive a bending load in a traveling direction of the pattern of the sealing portion 250, as shown in FIG. 3(A). That is, the first sealing pattern may receive the bending load in the width direction of a part where indentation or protrusion is repeatedly formed. Accordingly, the sealing portion 250 having the first sealing pattern partially receives the bending load, and thus, the sealing strength thereof may be relatively high.

Otherwise, referring to FIGS. 2 and 3(B), the gas discharge portion 250V has the second sealing pattern in which indentation and protrusion are formed in the width direction of the sealing portion 250. At this time, the second sealing pattern may receive a bending load in a direction perpendicular to the traveling direction of the pattern of the sealing portion 250, as shown in FIG. 3(B). That is, the second sealing pattern may receive the bending load in the longitudinal direction of the indented or protruding part. Accordingly, the gas discharge portion 250V having the second sealing pattern wholly receives the bending load in the indented or protruding part, and thus, the sealing strength thereof may be relatively low.

Accordingly, in the battery cell 100 of the present embodiment, the sealing strength of the gas discharge portion 250V having the second sealing pattern may be smaller than the sealing strength of the sealing portion 250 having the first sealing pattern. That is, when the internal pressure of the battery cell 100 increases, the gas discharge portion 250V may be damaged prior to the sealing portion 250, and the gas discharge portion 250V may serve as a gas discharge passage while inducing the discharge direction of gas.

In addition, the present embodiment has advantages in that a manufacturing process is simple and a manufacturing cost is reduced in that there is no separate member for gas discharge and the gas discharge portion 250V having different sealing strength is formed only by a difference in the sealing pattern.

For example, in the first sealing pattern and the second sealing pattern, indented or protruding parts may have the same intervals.

Accordingly, the manufacturing process may be easier and process efficiency may increase in that the first sealing pattern and the second sealing pattern are the same in the pattern interval but are merely different in the pattern forming direction.

As another example, the interval between the indented and protruding parts of the second sealing pattern may be greater than the interval between the indented and protruding parts of the first sealing pattern.

Accordingly, the sealing strength of the gas discharge portion 250V having the second sealing pattern may be reduced. That is, when the internal pressure of the battery cell 100 increases, the gas discharge portion 250V may be damaged within a faster time so that gas may be effectively discharged to the outside of the battery cell 100.

However, the intervals between the indented and protruding parts of the first sealing pattern and the second sealing pattern are not limited thereto, and the first sealing pattern and the second sealing pattern may be formed at various intervals in addition to the above.

A battery module according to another embodiment of the present invention may include the battery cell 100 described above. In particular, in the battery module, the battery cell 100 may be stacked in a direction in which a side surface thereof on which the electrode lead 300 is not located contacts a bottom surface thereof. Here, the battery cell 100 may be stacked in a direction in which the gas discharge portion 250V is adjacent to the bottom surface thereof. For example, the battery cell 100 may be stacked in a direction in which the gas discharge portion 250V is located in a lower side of the electrode lead 300. That is, in the battery cell 100, the gas discharge portion 250V may be formed in the lower side of the electrode lead 300 in the sealing portion 250.

Accordingly, in the present embodiment, the gas discharge portion 250V of the battery cell 100 may be located adjacent to the bottom surface thereof, so that when the internal pressure of the battery cell 100 increases, gas discharged through the gas discharge portion 250V may be discharged toward the bottom surface thereof. That is, in the present embodiment, gas discharged from some of the battery cells 100 is discharged toward the bottom surface, thereby minimizing the damage applied to the adjacent battery cells 100 caused by a high-temperature inflammable gas discharged from the battery cells 100 and also effectively delaying heat propagation to the adjacent battery cells 100.

Meanwhile, one or more battery modules according to the present embodiment may be packaged in a pack case and may form a battery pack.

The battery module described above and the battery pack including the battery module may be applied to various devices. These devices are applicable to transportation means such as electric bicycles, electric vehicles, hybrid vehicles, etc., but the present invention is not limited thereto and is applicable to various devices capable of using the battery module and the battery pack including the battery module, which also belongs to the scope of the present invention.

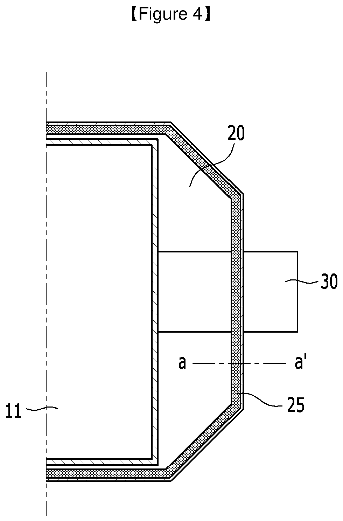

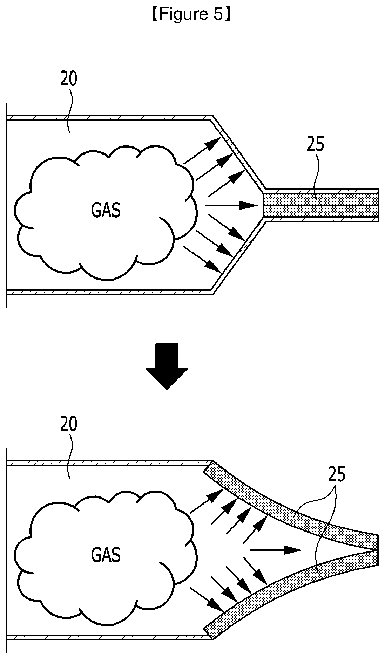

FIG. 4 is an enlarged view of one end of a battery cell according to a comparative example. FIG. 5 is a view showing a cross section taken along cutting line a-a' of FIG. 4.

Referring to FIG. 4, a battery cell 10 according to the comparative example may include an electrode assembly 11 mounted in a battery case 20 and a sealing portion 25 formed by sealing an outer periphery of the battery case. Here, the battery cell 10 includes an electrode lead 30 electrically connected to an electrode tab included in the electrode assembly 11 and protruding in an outer direction of the battery case 20 via the sealing portion 25.

Here, unlike the battery cell 100 of FIGS. 1 to 3, in the battery cell 10 according to the comparative example, a separate sealing pattern may not be formed on the sealing portion 25. That is, in the battery cell 10 of the comparative example, all parts of the sealing portion 25 may be sealed in a flat shape.

Referring to FIG. 5, in the case of the battery cell 10 according to the comparative example, it may be seen that since a separate sealing pattern is not formed on the sealing portion 25, the sealing portion 25 receives a bending load in a thickness direction of the battery cell 10, and is damaged. In particular, a part of the sealing portion 25 where the electrode lead 30 is located, which is a part most vulnerable to a sealing strength, may be damaged. In addition, the part where the electrode lead 30 is located may be located very close to an electrode lead of an adjacent battery cell, and a high-temperature flammable gas discharged through the damaged part of the sealing portion 25 may quickly heat the adjacent battery cell. Accordingly, there is a problem in that heat propagation between the battery cells 10 may more easily occur in the battery module including the battery cell 10 according to the comparative example.

In contrast, referring to FIGS. 1 to 3, the battery cell 100 according to the present embodiment may more easily discharge gas through the gas discharge portion 250V. In addition, gas may be discharged in a direction induced in advance by the gas discharge portion 250V, and thus, heat propagation between adjacent battery cells 100 may be prevented, and safety may be further improved.

Although the embodiments of the present invention have been described in detail above, the scope of the present invention is not limited thereto, and various modifications and improvements made by those of ordinary skill in the field to which the present invention pertains also belong to the scope of the present invention.

### <Description of Reference Numerals>

10, 100: battery cell
11, 110: electrode assembly
20, 200: battery case
210: storage portion
250: sealing portion
250V: gas discharge portion
30, 300: electrode lead
400: lead film

## Claims

1. A battery cell (100) comprising:
a battery case (200) including an electrode assembly (110) mounted in a storage portion (210) and a sealing portion (250) having a structure in which an outer periphery of the battery case (200) is sealed; and
an electrode lead (300) electrically connected to an electrode tab included in the electrode assembly (110), the electrode lead (300) protruding in an outer direction of the battery case (200) via the sealing portion (250),
wherein the sealing portion (250) includes a gas discharge portion (250V),
a part of the sealing portion (250) in which the gas discharge portion (250V) is not located is formed in a first sealing pattern,
the gas discharge portion (250V) is formed in a second sealing pattern,
the first sealing pattern and the second sealing pattern are different from each other; and
in the first sealing pattern, indentations and protrusions are repeated in a longitudinal direction of the sealing portion (250), and
in the second sealing pattern, indentations and protrusions are repeated in a width direction of the sealing portion (250).

2. The battery cell (100) of claim 1, wherein:
the first sealing pattern and the second sealing pattern have equal intervals between respective indentations and protrusions.

3. The battery cell (100) of claim 1, wherein:
an interval between the indentations and the protrusions of the second sealing pattern is greater than an interval between the indentations and the protrusions of the first sealing pattern.

4. The battery cell (100) of claim 1, wherein:
in the sealing portion (250), the gas discharge portion (250V) is located on a side of the outer periphery where the electrode lead (300) is located.

5. The battery cell (100) of claim 4, wherein:
in the outer periphery where the electrode lead (300) is located, the gas discharge portion (250V) is located in a part where the electrode lead (300) is not located.

6. The battery cell (100) of claim 1, wherein:
a sealing strength of the gas discharge portion (250V) is smaller than a sealing strength of the sealing portion (250).

7. A battery module comprising a plurality of the battery cells (100) of claim 1.

8. The battery module of claim 7, wherein:
the battery cells (100) are stacked in a direction in which the gas discharge portion (250V) is adjacent to a bottom surface of the battery cell (100).

9. The battery module of claim 8, wherein:
in the battery cell (100), the gas discharge portion (250V) is formed in a lower side of the electrode lead (300) in the sealing portion (250).

## Patentansprüche

1. Batteriezelle (100), umfassend:
ein Batteriegehäuse (200), welches eine Elektrodenanordnung (110), welche in einem Speicherabschnitt (210) montiert ist, und einen Versiegelungsabschnitt (250) umfasst, welcher eine Struktur aufweist, in welcher ein äußerer Umfang des Batteriegehäuses (200) versiegelt ist; und
eine Elektrodenleitung (300), welche elektrisch mit einer Elektrodenlasche verbunden ist, welche in der Elektrodenanordnung (110) umfasst ist, wobei die Elektrodenleitung (300) in einer äußeren Richtung des Batteriegehäuses (200) via des Versiegelungsabschnitts (250) vorsteht,
wobei der Versiegelungsabschnitt (250) einen Gasablassabschnitt (250V) umfasst,
ein Teil des Versiegelungsabschnitts (250), in welchem der Gasablassabschnitt (250V) nicht angeordnet ist, in einem ersten Versiegelungsmuster gebildet ist,
der Gasablassabschnitt (250V) in einem zweiten Versiegelungsmuster gebildet ist,
das erste Versiegelungsmuster und das zweite Versiegelungsmuster voneinander unterschiedlich sind, und
wobei in dem ersten Versiegelungsmuster Vertiefungen und Vorsprünge in einer longitudinalen Richtung des Versiegelungsabschnitts (250) wiederholt angeordnet sind, und
in dem zweiten Versiegelungsmuster Vertiefungen und Vorsprünge in einer Breitenrichtung des Versiegelungsabschnitts (250) wiederholt angeordnet sind.

2. Batteriezelle (100) nach Anspruch 1, wobei:
das erste Versiegelungsmuster und das zweite Versiegelungsmuster gleiche Abstände zwischen den jeweiligen Vertiefungen und Vorsprüngen aufweisen.

3. Batteriezelle (100) nach Anspruch 1, wobei:
ein Abstand zwischen den Vertiefungen und Vorsprüngen des zweiten Versiegelungsmusters größer ist als ein Abstand zwischen den Vertiefungen und Vorsprüngen des ersten Versiegelungsmusters.

4. Batteriezelle (100) nach Anspruch 1, wobei:
in dem Versiegelungsabschnitt (250), der Gasablassabschnitt (250V) an einer Seite des äußeren Umfangs angeordnet ist, an welcher die Elektrodenleitung (300) angeordnet ist.

5. Batteriezelle (100) nach Anspruch 4, wobei:
in dem äußeren Umfang, an welchem die Elektrodenableitung (300) angeordnet ist, der Gasablassabschnitt (250V) in einem Bereich angeordnet ist, in welchem die Elektrodenableitung (300) nicht angeordnet ist.

6. Batteriezelle (100) nach Anspruch 1, wobei:
eine Versiegelungsstärke des Gasablassabschnitts (250V) geringer ist als eine Versiegelungsstärke des Versiegelungsabschnitts (250).

7. Batteriemodul, umfassend eine Mehrzahl der Batteriezellen (100) nach Anspruch 1.

8. Batteriemodul nach Anspruch 7, wobei:
die Batteriezellen (100) in einer Richtung gestapelt sind, in welcher der Gasablassabschnitt (250V) benachbart zu einer Bodenfläche der Batteriezelle (100) ist.

9. Batteriemodul nach Anspruch 8, wobei:
in der Batteriezelle (100) der Gasablassabschnitt (250V) in einer unteren Seite der Elektrodenableitung (300) in dem Versiegelungsabschnitt (250) gebildet ist.

## Revendications

1. Cellule de batterie (100) comprenant :
un boîtier de batterie (200) comportant un ensemble d'électrodes (110) monté dans une partie de stockage (210) et une partie de scellement (250) présentant une structure dans laquelle une périphérie externe du boîtier de batterie (200) est scellée ; et
un fil d'électrode (300) électriquement connecté à une patte d'électrode incluse dans l'ensemble d'électrodes (110), le fil d'électrode (300) faisant saillie dans une direction externe du boîtier de batterie (200) via la partie de scellement (250) ; et
dans laquelle la partie de scellement (250) comporte une partie de décharge de gaz (250V),
une portion de la partie de scellement (250) dans laquelle la partie de décharge de gaz (250V) n'est pas située est formée dans un premier motif de scellement,
la partie de décharge de gaz (250V) est formée dans un deuxième motif de scellement,
le premier motif de scellement et le deuxième motif de scellement sont différents l'un de l'autre ; et
dans le premier motif de scellement, des indentations et des saillies se répètent dans une direction longitudinale de la partie de scellement (250), et
dans le deuxième motif de scellement, des indentations et des saillies se répètent dans une direction de largeur de la partie de scellement (250).

2. Cellule de batterie (100) selon la revendication 1, dans laquelle :
le premier motif de scellement et le deuxième motif de scellement présentent des intervalles égaux entre des indentations et des saillies respectives.

3. Cellule de batterie (100) selon la revendication 1, dans laquelle :
un intervalle entre les indentations et les saillies du deuxième motif de scellement est plus grand qu'un intervalle entre les indentations et les saillies du premier motif de scellement.

4. Cellule de batterie (100) selon la revendication 1, dans laquelle :
dans la partie de scellement (250), la partie de décharge de gaz (250V) est située sur un côté de la périphérie externe où le fil d'électrode est situé (300).

5. Cellule de batterie (100) selon la revendication 4, dans laquelle :
dans la périphérie externe où est situé le fil d'électrode (300), la partie de décharge de gaz (250V) est située dans une partie où le fil d'électrode (300) n'est pas situé.

6. Cellule de batterie (100) selon la revendication 1, dans laquelle :
une force de scellement de la partie de décharge de gaz (250V) est inférieure à une force de scellement de la partie de scellement (250).

7. Module de batterie comprenant une pluralité des cellules de batterie (100) selon la revendication 1.

8. Module de batterie selon la revendication 7, dans lequel :
les cellules de batterie (100) sont empilées dans une direction dans laquelle la partie de décharge de gaz (250V) est adjacente à une surface inférieure de la cellule de batterie (100).

9. Module de batterie selon la revendication 8, dans lequel :
dans la cellule de batterie (100), la partie de décharge de gaz (250V) est formée sur un côté inférieur du fil d'électrode (300) dans la partie de scellement (250).
